# FASCICULE DE BREVET EUROPEEN

(11) **EP 4 680 847 B1**
(45) Date de publication et mention de la délivrance du brevet: **25.11.2026**
(21) Numéro de dépôt: 24718878.2
(22) Date de dépôt: 14.03.2024
(51) Int. Cl.: F02C 3/13, F02C 6/08, F02K 3/06, F02K 3/075, F02K 3/077

(54) **CARTER INTERMÉDIAIRE DE TURBOMACHINE**
ZWISCHENGEHÄUSE FÜR EINEN TURBINENMOTOR
INTERMEDIATE CASING FOR A TURBINE ENGINE

(30) Priorité: 14.03.2023 FR 2302356
(43) Date de publication de la demande: 21.01.2026
(73) Titulaire: SAFRAN AIRCRAFT ENGINES, 75015 Paris (FR)
(72) Inventeur: EDYNAK, Jérémy Philippe Pierre, 77550 MOISSY-CRAMAYEL (FR); MARLIN, François Marie Paul, 77550 MOISSY-CRAMAYEL (FR); THIRIET, Cécile, 77550 MOISSY-CRAMAYEL (FR); HAMMOUCH, Mustapha, 77550 MOISSY-CRAMAYEL (FR)
(74) Mandataire: Santarelli
(86) Numéro de dépôt international: PCT/FR2024/050309
(87) Numéro de publication internationale: WO 2024/189295

(56) Documents cités:
- FR-A1- 3 122 903
- GB-A- 1 493 049
- US-A1- 2002 148 216
- US-A1- 2015 059 315

## Description

La présente invention concerne une turbomachine à trois flux à hélice, et plus spécifiquement un ensemble comprenant un carter intermédiaire d'une telle turbomachine.

Une turbomachine à trois flux à hélice qui s'étend selon un axe longitudinal X comporte, de l'amont vers l'aval (dans le sens normal de circulation de l'air en fonctionnement) un moyeu dont un tronçon rotatif porte une couronne de pales formant l'hélice. Ce tronçon rotatif est porté par un arbre entrainé en rotation par un générateur de gaz. Cet arbre s'étend selon l'axe longitudinal X. A l'extérieur du moyeu et en aval de l'hélice se situe un carter interne qui est coaxial avec le moyeu. A l'extérieur du carter interne et également en aval de l'hélice se situe un carter externe qui est coaxial avec le moyeu. L'extrémité amont du carter externe est en amont de l'extrémité amont du carter interne.

Le moyeu et le carter interne présentent chacun une partie amont et une partie aval. Entre les parties amonts du moyeu et du carter interne d'une part, et les parties avals du moyeu et du carter interne d'autre part se situe un carter intermédiaire, également appelé « carter inter-compresseur ». Ce carter intermédiaire est fixé à la fois sur les parties amonts et les parties avals du moyeu et du carter interne, et s'étend dans un plan transversal (c'est-à-dire perpendiculaire) à l'axe longitudinal X. Le carter intermédiaire comporte un moyeu, appelé moyeu intermédiaire, une virole inter-veine, une virole extérieure, des bras structuraux reliant le moyeu intermédiaire et la virole extérieure. Le carter intermédiaire a pour fonctions de répondre aux exigences structurales, mécaniques et de souplesse du moteur, de reprendre les efforts provenant des paliers situés à proximité de ce carter intermédiaire, de reprendre les efforts de bielles, de soutenir la fixation des boîtiers d'entraînement pour équipements (en anglais *Accessory Gearbox* ou AGB) et la fixation de divers équipements. La virole extérieure, également appelée « VCI », est montée sur le moyeu intermédiaire au moyen des bras structuraux qui sont radiaux. Le carter intermédiaire comporte sur sa face aval un flasque aval et sur sa face amont un flasque amont.

En fonctionnement normal, un flux d'air (appelé flux secondaire) circule à l'extérieur du moyeu et du carter externe. Une veine primaire annulaire s'étend entre le carter externe et le moyeu puis entre le carter interne et le moyeu. Cette veine primaire débouche en aval, au niveau de sa sortie, dans le générateur de gaz. Dans cette veine primaire circule un flux primaire qui alimente en air le générateur de gaz en fonctionnement normal de la turbomachine. Le carter intermédiaire est traversé par la veine primaire.

L'espace entre le carter interne et le carter externe défini une veine tertiaire qui est située radialement à l'extérieur de la veine primaire. L'entrée amont de cette veine tertiaire se situe dans la veine primaire au niveau de l'extrémité amont du carter interne. Cette veine tertiaire débouche en aval, au niveau de sa sortie, dans l'atmosphère. Le carter intermédiaire est traversé par la veine tertiaire. La turbomachine comporte en outre un conduit d'évacuation qui s'étend entre la veine primaire et la veine tertiaire. Le conduit d'évacuation est aussi appelé « conduit de décharge ».

Ainsi, on connait un ensemble pour turbomachine constitué d'une part d'un carter intermédiaire s'étendant selon un axe longitudinal, ce carter intermédiaire comportant une portion de veine primaire, une portion de veine tertiaire, un moyeu intermédiaire, une virole inter-veine, une virole extérieure, des bras structuraux reliant le moyeu intermédiaire et la virole extérieure, et d'autre part d'un conduit d'évacuation qui s'étend entre la veine primaire et la veine tertiaire et de vannes de décharge aptes à prélever du fluide sur la portion de veine primaire pour la diriger vers le conduit d'évacuation.

Le brevet FR3012846B1 décrit un exemple de vannes de décharge montées sur un carter intermédiaire de turbomachine double corps.

La veine primaire présente des ouvertures latérales au travers desquelles les vannes de décharge sont montées dans le carter intermédiaire.

Le carter intermédiaire muni des vannes de décharge présente un poids qui est important, qui se traduit par une consommation accrue de carburant, ce qui est indésirable. En outre, la présence d'une veine primaire et d'une veine tertiaire complexifient l'assemblage et la maintenance des vannes de décharge.

Le document FR3122903A1 présente également un carter intermédiaire selon l'art antérieur.

### Description de l'invention

La présente invention vise à remédier à ces inconvénients.

L'invention vise à proposer un carter intermédiaire selon la revendication 1 muni de vannes de décharge dont la structure soit améliorée afin d'être à la fois plus légère et plus pratique pour l'assemblage et la maintenance des vannes de décharge.

Ce but est atteint grâce au fait que le carter intermédiaire est monobloc et qu'il présente un logement qui est situé entre le moyeu intermédiaire et la virole inter-veine et qui débouche sur la face amont du carter intermédiaire par une ouverture qui est située entre le moyeu intermédiaire et la virole inter-veine, les vannes de décharge étant aptes à être introduites dans le logement par cette ouverture.

Grâce à ces dispositions, notamment le fait que le carter intermédiaire est monobloc, l'assemblage du carter intermédiaire est simplifié. Le poids du carter intermédiaire est diminué par rapport à un carter intermédiaire dans lequel la virole extérieure est amovible par rapport au moyeu intermédiaire car il n'est plus nécessaire d'utiliser de brides de fixation de la virole extérieure sur le moyeu intermédiaire. La présence d'un logement du carter intermédiaire pour loger les vannes de décharge qui débouche sur la face amont par une ouverture par laquelle les vannes de décharge peuvent être introduites permet de faciliter le montage et la maintenance de ces vannes de décharge.

Avantageusement la superficie de l'ouverture est supérieure à 50 % de la superficie totale de la partie de la face amont située entre le moyeu intermédiaire et la virole inter-veine.

Ainsi, une plus grande variété de vannes de décharge est apte à être logée dans le logement du carter intermédiaire.

Avantageusement, le carter intermédiaire est dépourvu de flasque amont sur sa face amont.

Ainsi, l'accessibilité aux vannes de décharge est simplifiée, ce qui permet de loger plus facilement les vannes de décharge. Ceci limite par ailleurs cotes hors tolérance de fabrication dans le cadre des usinages à réaliser pour la fixation de ces vannes de décharge. De plus, le poids total du carter intermédiaire est diminué.

L'invention concerne également une turbomachine qui comporte un moyeu qui porte une hélice, un carter externe, un carter interne qui se situe radialement à l'extérieur du moyeu, et un carter externe qui se situe radialement à l'extérieur du carter interne, la veine primaire s'étendant entre le moyeu et le carter interne et présentant une entrée amont qui se situe en aval de l'hélice, la veine tertiaire s'étendant à l'extérieur radialement de la veine primaire entre le carter interne et le carter externe et présentant une entrée amont qui se situe dans la veine primaire au niveau de l'extrémité amont du carter interne, la turbomachine comportant un ensemble selon l'invention.

Par exemple, l'hélice est carénée par une nacelle annulaire.

L'invention concerne également un procédé de montage de vannes de décharge dans un carter intermédiaire d'un ensemble selon l'invention, tel que chacune des vannes de décharge est introduite dans le logement par l'ouverture.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue schématique en coupe longitudinale d'une turbomachine selon l'invention.
[Fig. 2] La figure 2 est une vue de la région R de la figure 1 montrant le carter intermédiaire.
[Fig. 3] La figure 3 est une vue en perspective d'un carter intermédiaire d'un ensemble selon l'invention.
[Fig. 4] La figure 4 est une vue schématique en coupe longitudinale d'un carter intermédiaire d'un ensemble selon l'invention montrant l'introduction d'une vanne de décharge dans son logement.

### Description détaillée de l'invention

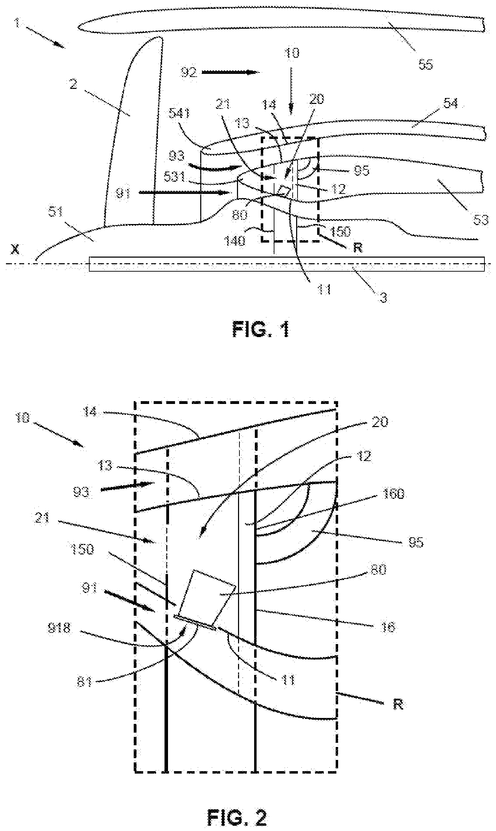

Dans la description qui suit, la figure 1 illustre schématiquement une turbomachine 1 à trois flux à hélice 2 selon l'invention, en coupe longitudinale (la partie de la turbomachine 1 qui est la plus en aval n'est pas représentée). La turbomachine 1 est représentée dans le cas d'une hélice 2 carénée par une nacelle 55 annulaire. Alternativement, l'hélice 2 est non-carénée. La turbomachine 1 s'étend selon un axe longitudinal X. Cette turbomachine 1 comporte, de l'amont vers l'aval (c'est-à-dire dans le sens normal de circulation de l'air en fonctionnement) un moyeu 51 dont un tronçon rotatif porte une couronne de pales formant l'hélice carénée 2. Ce tronçon rotatif est porté par un arbre 3 entrainé en rotation par un générateur de gaz (non illustré). Cet arbre 3 s'étend selon l'axe longitudinal X. Le moyeu 51 est constitué le long de l'axe longitudinal X de tronçons rotatifs et de tronçons statiques. A l'extérieur du moyeu 51 et en aval de l'hélice 2 se situe un carter interne 53 qui est coaxial avec le moyeu 51. A l'extérieur du carter interne 53 et également en aval de l'hélice 2 se situe un carter externe 54 qui est coaxial avec le moyeu 51. L'extrémité amont 541 du carter externe 54 est en amont de l'extrémité amont 531 du carter interne 53. Le moyeu 51 et le carter interne 53 présentent chacun une partie amont et une partie aval.

Entre les parties amonts du moyeu 51 et du carter interne 53 d'une part, et les parties avals du moyeu 51 et du carter interne 53 d'autre part se situe un carter intermédiaire 10, également appelé « carter inter-compresseur ». Ce carter intermédiaire 10 est fixé d'une part sur la partie amont et sur la partie aval du moyeu 51, et d'autre part sur la partie amont et sur la partie aval du carter interne 53, et s'étend dans un plan transversal (c'est-à-dire perpendiculaire) à l'axe longitudinal X.

En fonctionnement normal, un flux d'air (appelé flux secondaire) circule à l'extérieur du moyeu 51 et du carter externe 54. Ce flux secondaire circule dans une veine secondaire 92 dont la paroi radialement interne est constituée par la surface externe du carter externe 54 et dont la paroi radialement externe est constituée par la surface interne de la nacelle 55. Ainsi, la nacelle 55 est située à l'extérieur radialement du carter externe 54. Une veine primaire 91 annulaire s'étend entre le carter externe 54 et le moyeu 51 puis entre le carter interne 53 et le moyeu 51. Cette veine primaire 91 débouche en aval, au niveau de sa sortie, dans le générateur de gaz. Dans cette veine primaire 91 circule un flux primaire qui alimente en air le générateur de gaz en fonctionnement normal de la turbomachine 1. La turbomachine comporte une veine tertiaire 93 qui s'étend entre le carter interne 53 et le carter externe 54, et qui est donc située à l'extérieur radialement par rapport à la veine primaire 91. L'entrée amont de cette veine tertiaire 93 se situe dans la veine primaire 91 au niveau de l'extrémité amont du carter interne 53. Cette veine tertiaire 93 débouche en aval au niveau de sa sortie dans l'atmosphère. Dans cette veine tertiaire 93 circule un flux tertiaire.

Le carter intermédiaire 10 est traversé par la veine primaire 91 et par la veine tertiaire 93. En d'autres termes, le carter intermédiaire 10 délimite une portion de la veine primaire 91 et une portion de la veine tertiaire 93. Le carter intermédiaire 10 comporte un moyeu intermédiaire 11 central qui est centré sur l'axe longitudinal X, une virole inter-veine 13, une virole extérieure 14, des bras 12 structuraux qui relient le moyeu intermédiaire 11, la virole inter-veine 13 et la virole extérieure 14. Le carter interne 53 comprend une partie du moyeu intermédiaire 11 central et la virole interne-veine 13. Au niveau du carter intermédiaire 10, les parois de la veine primaire 91 sont formées par le moyeu intermédiaire 11 central. Au niveau du carter intermédiaire 10, la paroi radialement interne de la veine tertiaire 93 est formée par la virole inter-veine 13, et la paroi radialement externe de la veine tertiaire 93 est formée par la virole extérieure 14. La virole extérieure 14 fait partie du carter externe 54. Le carter intermédiaire 10 présente une face amont 150 et une face aval 160 (voir figure 2). Par exemple, le carter intermédiaire 10 présente un flasque aval 16 sur sa face aval 160, qui est situé en aval des bras 12.

Le carter intermédiaire 10 est monobloc, ce qui facilite sa fabrication et réduit son poids. En effet, il n'est pas nécessaire d'assembler la virole inter-veine 13, la virole extérieure 14 et le moyeu intermédiaire 11.

Le carter intermédiaire est muni d'un conduit d'évacuation 95 qui s'étend entre la veine primaire 91 et la veine tertiaire 93. Par exemple, le conduit d'évacuation 95 est constitué d'une pluralité de conduits d'évacuations individuels séparés. Par exemple, chacun de ces conduits d'évacuation est de section rectangulaire. On fera référence à un conduit d'évacuation 95 pour désigner un conduit individuel ou l'ensemble de ces conduits d'évacuation.

On définit un ensemble constitué du carter intermédiaire 10, de ce conduit d'évacuation 95 et d'une pluralité de vannes de décharge 80 qui sont réparties circonférentiellement autour de l'axe longitudinal X. Les vannes de décharge 80 sont aptes à prélever une partie du fluide d'écoulant dans la veine primaire 91 pour la diriger vers la veine tertiaire 93 par l'intermédiaire du conduit d'évacuation 95. Il est effectué ci-dessous la description de l'environnement et du fonctionnement d'une vanne de décharge 80, cette description s'appliquant à chacune des vannes de décharge 80. La figure 2 est une vue agrandie de la région R de la figure 1, qui illustre le carter intermédiaire 10, le conduit d'évacuation 95 et une des vannes de décharge 80.

La paroi radialement externe de la veine primaire 91 comporte une ouverture latérale 918 qui met en communication fluidique la veine primaire 91 et le conduit d'évacuation 95 au travers de la vanne de décharge 80. L'ouverture latérale 918 située sur le moyeu intermédiaire 11. La vanne de décharge 80 comprend une porte 81 qui est apte à basculer entre une position fermée où elle obture l'ouverture latérale 918 et une position ouverte où elle ouvre cette ouverture latérale 918. En position fermée, la veine primaire 91 est isolée du conduit d'évacuation 95. En position ouverte, le fluide est apte à circuler de la veine primaire 91 dans la vanne de décharge 80 puis dans le conduit d'évacuation 95.

Le carter intermédiaire 10 présente un logement 20 qui est situé entre le moyeu intermédiaire 11 et la virole inter-veine 13, et qui débouche sur la face amont 150 du carter intermédiaire 10 par une ouverture 21. Le logement 20 est donc situé au niveau du carter interne 53. Le logement 20 est une partie du conduit d'évacuation 95, et est ainsi défini en partie par le moyeu intermédiaire 11 et la virole inter-veine 13. Par exemple, le logement 20 forme un espace continu. Par exemple, le logement 20 est divisé partiellement ou totalement par les bras 12 structuraux. Les vannes de décharge 80 sont aptes à être logées dans le logement 20. L'ouverture 21 est située entre le moyeu intermédiaire 11 et la virole inter-veine 13. L'ouverture 21 est annulaire. Par exemple, l'ouverture 21 est constituée d'une pluralité d'ouvertures séparées par les bras 12 structuraux.

Chaque vanne de décharge 80 est introduite dans le logement 20 par l'ouverture 21 pour être logée dans ce logement 20. Chaque vanne de décharge 80 est positionnée de telle sorte que la porte 81 épouse l'ouverture latérale 918 de la veine primaire 91.

La dimension de l'ouverture 21 au niveau de la face amont 150 entre le moyeu intermédiaire 11 et la virole inter-veine 13 est suffisante pour permettre le passage et le montage des vannes de décharge 80 dans le logement 20. La maintenance ultérieure des vannes de décharge 80 est également facilitée. En effet, cette configuration permet le passage par l'ouverture 21 d'outils servant à effectuer la fixation et la maintenance des vannes de décharge 80. Par exemple, ces outils servent à usiner des reliefs tels que des bossages sur le moyeu intermédiaire 11 afin de permettre la fixation des vannes de décharge 80.

Ainsi, la superficie de l'ouverture 21 est supérieure à 50 % de la superficie totale de la partie de la face amont 150 située entre le moyeu intermédiaire (11) et la virole inter-veine (13). Par exemple, la hauteur radiale de l'ouverture 21 au niveau de la face amont 150 est supérieure à 10 centimètres.

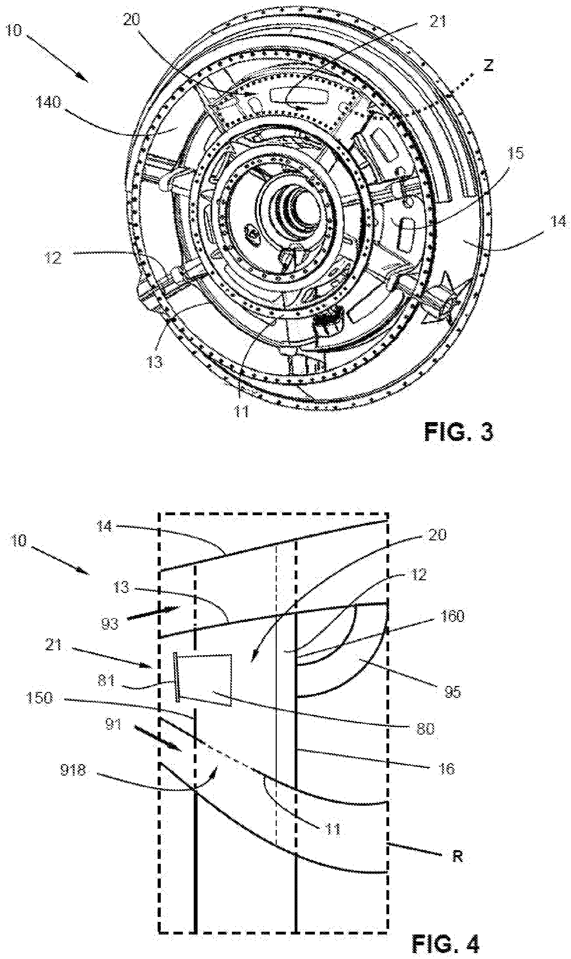

Selon un mode de réalisation de l'invention, le carter intermédiaire 10 est dépourvu de flasque amont (ce flasque amont est normalement monté sur la face amont 150). Le poids total du carter intermédiaire 10 est ainsi diminué. Les essais mécaniques réalisés par les inventeurs montrent, de façon surprenante, que l'absence de flasque amont n'affecte pas de façon préjudiciable les performances mécaniques du carter intermédiaire 10. En d'autres termes, un carter intermédiaire 10 sans flasque amont présentent des caractéristiques mécaniques qui sont supérieures aux caractéristiques requises. La figure 3 est une vue en perspective du carter intermédiaire 10 dans ce mode de réalisation. Par souci de clarté les vannes de décharge 80 n'ont pas été illustrées. La zone Z de l'ouverture 21 entre deux bras 12 structuraux est illustrée schématiquement en pointillés. On constate que l'absence de flasque amont permet de libérer (de dégager) sur la face amont 150 du carter intermédiaire 10 une ouverture 21 plus large (c'est-à-dire une ouverture plus large que si le carter intermédiaire 10 possède un flasque amont) pour l'introduction des vannes de décharge 80 dans le logement 20.

L'invention concerne également un procédé par lequel une vanne de décharge 80 est introduite dans le logement 20 par l'ouverture 21.

La figure 4 illustre schématiquement en coupe longitudinale d'un carter intermédiaire 10 avec une vanne de décharge 80 au moment de son introduction dans le logement 20 par l'ouverture 21.

Sur la figure 2, la vanne de décharge 80 est illustrée schématiquement en position finale dans le logement 20. La porte 81 est illustrée dans la position où elle obture presque l'ouverture latérale 918 de la veine primaire 91.

## Revendications

1. Ensemble pour turbomachine (1) constitué d'une part d'un carter intermédiaire (10) s'étendant selon un axe longitudinal (X), ledit carter intermédiaire (10) comportant une portion de veine primaire (91), une portion de veine tertiaire (93), un conduit d'évacuation (95) qui s'étend entre ladite veine primaire (91) et ladite veine tertiaire (93), un moyeu intermédiaire (11), une virole inter-veine (13), une virole extérieure (14), des bras (12) structuraux reliant ledit moyeu intermédiaire (11) et ladite virole extérieure (14), et d'autre part de vannes de décharge (80) aptes à prélever du fluide sur ladite portion de veine primaire (91) pour la diriger vers ledit conduit d'évacuation (95), ledit carter intermédiaire (10) étant **caractérisé en ce qu'**il est monobloc et qu'il présente un logement (20) qui est situé entre ledit moyeu intermédiaire (11) et ladite virole inter-veine (13) et qui débouche sur la face amont (150) dudit carter intermédiaire (10) par une ouverture (21) qui est située entre ledit moyeu intermédiaire (11) et ladite virole inter-veine (13), lesdites vannes de décharge (80) étant aptes à être introduites dans ledit logement (20) par ladite ouverture (21).

2. Ensemble selon la revendication 1 tel que la superficie de ladite ouverture (21) est supérieure à 50 % de la superficie totale de la partie de ladite face amont (150) située entre ledit moyeu intermédiaire (11) et ladite virole inter-veine (13).

3. Ensemble selon la revendication 1 ou 2 tel que ledit carter intermédiaire (10) est dépourvu de flasque amont sur sa face amont (150).

4. Turbomachine (1) qui comporte un moyeu (51) qui porte une hélice (2), un carter interne (53) qui se situe radialement à l'extérieur dudit moyeu (51), et un carter externe (54) qui se situe radialement à l'extérieur dudit carter interne (53), ladite veine primaire (91) s'étendant entre ledit moyeu (51) et ledit carter interne (53) et présentant une entrée amont qui se situe en aval de ladite hélice (2), ladite veine tertiaire (93) s'étendant à l'extérieur radialement de ladite veine primaire (91) entre ledit carter interne (53) et ledit carter externe (54) et présentant une entrée amont qui se situe dans ladite veine primaire (91) au niveau de l'extrémité amont dudit carter interne (53), ladite turbomachine (1) comportant un ensemble selon l'une quelconque des revendications 1 à 3.

5. Turbomachine selon la revendication précédente tel que ladite hélice (2) est carénée par une nacelle (55) annulaire.

6. Procédé de montage de vannes de décharge (80) dans un carter intermédiaire (10) d'un ensemble selon l'une quelconque des revendications 1 à 3, **caractérisé en ce que** chacune desdites vannes de décharge (80) est introduite dans ledit logement (20) par ladite ouverture (21).

## Patentansprüche

1. Baugruppe für Turbomaschine (1), bestehend einerseits aus einem sich entlang einer Längsachse (X) erstreckenden Zwischengehäuse (10), wobei das Zwischengehäuse (10) einen primären Strömungskanalabschnitt (91), einen tertiären Strömungskanalabschnitt (93), eine Abflussleitung (95), die sich zwischen dem primären Strömungskanal (91) und dem tertiären Strömungskanal (93) erstreckt, eine Zwischennabe (11), einen Strömungskanal-Zwischenring (13), einen Außenring (14) und strukturelle Arme (12) umfasst, die die Zwischennabe (11) und den Außenring (14) verbinden, und andererseits aus Überströmventilen (80), die geeignet sind, Fluide aus dem primären Strömungskanalabschnitt (91) zu entnehmen, um sie in Richtung der Abflussleitung (95) zu leiten, wobei das Zwischengehäuse (10) **dadurch gekennzeichnet ist, dass** es einteilig ist und ein Gehäuse (20) aufweist, das sich zwischen der Zwischennabe (11) und dem Strömungskanal-Zwischenring (13) befindet und durch eine Öffnung (21), die sich zwischen der Zwischennabe (11) und dem Strömungskanal-Zwischenring (13) befindet, an der stromaufwärtigen Seite (150) des Zwischengehäuses (10) mündet, wobei die Überströmventile (80) geeignet sind, durch die Öffnung (21) in das Gehäuse (20) eingeführt werden zu können.

2. Baugruppe nach Anspruch 1, wobei die Fläche der Öffnung (21) mehr als 50 % der Gesamtfläche des Teils der stromaufwärtigen Seite (150) beträgt, der sich zwischen der Zwischennabe (11) und dem Strömungskanal-Zwischenring (13) befindet.

3. Baugruppe nach Anspruch 1 oder 2, wobei das Zwischengehäuse (10) an seiner stromaufwärtigen Seite (150) keinen stromaufwärtigen Flansch aufweist.

4. Turbomaschine (1), die eine Nabe (51), die einen Propeller (2) trägt, ein inneres Gehäuse (53), das sich radial außerhalb der Nabe (51) befindet, und ein äußeres Gehäuse (54) umfasst, das sich radial außerhalb des inneren Gehäuses (53) befindet, wobei sich der primäre Strömungskanal (91) zwischen der Nabe (51) und dem inneren Gehäuse (53) erstreckt und einen stromaufwärtigen Eingang aufweist, der sich stromabwärtig des Propellers (2) befindet, wobei sich der tertiäre Strömungskanal (93) radial außerhalb des primären Strömungskanals (91) zwischen dem inneren Gehäuse (53) und dem äußeren Gehäuse (54) erstreckt und einen stromaufwärtigen Eingang aufweist, der sich in dem primären Strömungskanal (91) am stromaufwärtigen Ende des inneren Gehäuses (53) befindet, wobei die Turbomaschine (1) eine Baugruppe nach einem der Ansprüche 1 bis 3 umfasst.

5. Turbomaschine nach dem vorhergehenden Anspruch, wobei der Propeller (2) durch eine ringförmige Gondel (55) verkleidet ist.

6. Verfahren zur Montage von Überströmventilen (80) in einem Zwischengehäuse (10) einer Baugruppe nach einem der Ansprüche 1 bis 3, **dadurch gekennzeichnet, dass** jedes der Überströmventile (80) durch die Öffnung (21) in das Gehäuse (20) eingeführt wird.

## Claims

1. Assembly for a turbine engine (1) consisting, on the one hand, of an intermediate casing (10) extending along a longitudinal axis (X), said intermediate casing (10) comprising a primary flow stream portion (91), a tertiary flow stream portion (93), an exhaust duct (95) extending between said primary flow stream (91) and said tertiary flow stream (93), an intermediate hub (11), an inter-stream shroud (13), an outer shroud (14), structural arms (12) connecting said intermediate hub (11) and said outer shroud (14), and on the other hand bypass valves (80) capable of drawing fluid from said primary flow stream portion (91) and directing it towards said exhaust duct (95), said intermediate casing (10) being **characterized in that** it is formed as a single piece and has a cavity (20) located between said intermediate hub (11) and said inter-stream shroud (13), which cavity opens out onto the upstream face (150) of said intermediate casing (10) via an opening (21) located between said intermediate hub (11) and said inter-stream shroud (13), said bypass valves (80) being able to be inserted into said cavity (20) through said opening (21).

2. Assembly according to claim 1, **characterized in that** the surface area of said opening (21) is greater than 50% of the total surface area of the part of said upstream face (150) located between said intermediate hub (11) and said inter-stream shroud (13).

3. Assembly according to claim 1 or 2, **characterized in that** said intermediate casing (10) is devoid of any upstream flange on its upstream face (150).

4. Turbine engine (1) comprising a hub (51) which supports a propeller (2), an inner casing (53) located radially outside said hub (51), and an outer casing (54) located radially outside said inner casing (53), said primary flow stream (91) extending between said hub (51) and said inner casing (53) and having an upstream inlet located downstream of the propeller (2), said tertiary flow stream (93) extending radially outside said primary flow stream (91) between said inner casing (53) and said outer casing (54) and having an upstream inlet that is located in said primary flow stream (91) at the upstream end of said inner casing (53), said turbine engine (1) comprising an assembly according to any one of claims 1 to 3.

5. Turbine engine according to the preceding claim, **characterized in that** said propeller (2) is ducted by an annular nacelle (55).

6. Method for mounting bypass valves (80) in an intermediate casing (10) of an assembly according to any one of claims 1 to 3, **characterized in that** each of said bypass valves (80) is inserted into said cavity (20) through said opening (21).
